# EUROPEAN PATENT SPECIFICATION

(11) **EP 3 720 212 B1**
(45) Date of publication and mention of the grant of the patent: **04.10.2023**
(21) Application number: 18882827.1
(22) Date of filing: 30.11.2018
(51) Int. Cl.: H04W 72/04, H04W 28/04, H04L 1/00, H04L 1/16, H04L 1/18

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR, ET PROCÉDÉ DE COMMUNICATION SANS FIL

(30) Priority: 01.12.2017 JP 2017243205
(43) Date of publication of application: 07.10.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/044206
(87) International publication number: WO 2019/107547

(56) References cited:
- CATT: "Multiplexing of UCI and UL data on PUSCH", 3GPP DRAFT; R1-1720200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369836, Retrieved from the Internet: URL:http://www.3gpp.org/ftp/tsg%5Fran/WG1% 5FRL1/TSGR1%5F91/Docs/ [retrieved on 2017-11-18]
- LG ELECTRONICS: "UCI on PUSCH and UL channel multiplexing for NR", 3GPP DRAFT; R1-1719927, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369640, Retrieved from the Internet: URL:http://www.3gpp.org/ftp/tsg%5Fran/WG1% 5FRL1/TSGR1%5F91/Docs/ [retrieved on 2017-11-18]
- VIVO: "On UCI multiplexing", 3GPP DRAFT; R1-1719791 ON UCI MULTIPLEXING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369534, Retrieved from the Internet: URL:http://www.3gpp.org/ftp/tsg%5Fran/WG1% 5FRL1/TSGR1%5F91/Docs/ [retrieved on 2017-11-18]
- HUAWEI ET AL: "On UCI multiplexing", 3GPP DRAFT; R1-1719397, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369306, Retrieved from the Internet: URL:http://www.3gpp.org/ftp/tsg%5Fran/WG1% 5FRL1/TSGR1%5F91/Docs/ [retrieved on 2017-11-18]
- LG ELECTRONICS: "UCI on PUSCH and UL channel multiplexing for NR", 3GPP TSG RAN WG1 #91 Rl-1719927, 18 November 2017 (2017-11-18), XP051369640,
- HUAWEI et al.: "On UCI multiplexing", 3GPP TSG RAN WG1 #91 Rl-1719397, 18 November 2017 (2017-11-18), XP051369306,

## Description

### Technical Field

The present disclosure relates to a user terminal and a radio communication method in next-generation mobile communication systems.

### Background Art

In UMTS (Universal Mobile Telecommunications System) networks, the specifications of Long Term Evolution (LTE) have been drafted for the purpose of further increasing high speed data rates, providing lower latency, and so on (see Non-Patent Literature 1). For the purpose of further high capacity, advancement, and so on of LTE (LTE Rel. 8, Rel. 9), the specifications of LTE-A (LTE-Advanced, LTE Rel. 10, Rel. 11, Rel. 12, Rel. 13) have been drafted.

Successor systems of LTE (referred to as, for example, "FRA (Future Radio Access)," "5G (5th generation mobile communication system)," "5G+ (plus)," "NR (New Radio)," "NX (New radio access)," "FX (Future generation radio access)," "LTE Rel. 14," "LTE Rel. 15" (or later versions), and so on) are also under study.

In existing LTE systems (for example, LTE Rel. 8 to Rel. 13), a user terminal (UE (User Equipment)) transmits uplink control information (UCI) by using a UL data channel (for example, PUSCH (Physical Uplink Shared Channel) and/or a UL control channel (for example, PUCCH (Physical Uplink Control Channel)).

In a case where a transmission timing for uplink data overlaps a transmission timing for the uplink control information (UCI), the UE may transmit the uplink data and the UCI by using an uplink shared channel (PUSCH). Transmission of the UCI by utilizing the PUSCH is also referred to as "UCI on PUSCH" ("piggyback on PUSCH"), UCI piggyback, PUSCH piggyback, and so on.

The UCI may include, for example, retransmission control information for DL data (also referred to as an "HARQ-ACK," "ACK/NACK," "A/N," and so on), a scheduling request (SR), and CSI (for example, periodic CSI (P-CSI), aperiodic CSI (A-CSI), and so on) .

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTR-AN); Overall description; Stage 2 (Release 8)," April, 2010. Existing methods of mapping HARQ-ACK, CSI part 1, and CSI part 2 around DMRS are disclosed in CATT: "Multiplexing of UCI and UL data on PUSCH",3GPP DRAFT; R1-1720200 (2017-11-18), LG ELECTRONICS: "UCI on PUSCH and UL channel multiplexing for NR", 3GPP DRAFT; R1-1719927 (2017-11-18), VIVO: "On UCI multiplexing", 3GPP DRAFT; R1-1719791 (2017-11-18), and HUAWEI ET AL: "On UCI multiplexing", 3GPP DRAFT; R1-1719397 (2017-11-18).

### Summary of Invention

### Technical Problem

Like existing LTE systems, future radio communication systems (hereinafter also referred to as "NR") may perform uplink data and UCI transmission by utilizing a PUSCH. On the other hand, for NR, it is assumed that transmission processing (for example, mapping) is executed on each of a plurality of types of channel state information (CSI) separately.

However, in a case where mapping in a PUSCH is performed on each of the plurality of types of CSI separately, studies have not sufficiently been conducted yet about how to control the transmission processing. Employment of transmission processing similar to that in the existing LTE systems may degrade communication throughput, communication quality, and so on.

In view of this, an object of the present disclosure is to provide a user terminal and a radio communication method which can suppress a decrease in communication throughput and so on even in a case where uplink control information is multiplexed on an uplink data channel.

### Solution to Problem

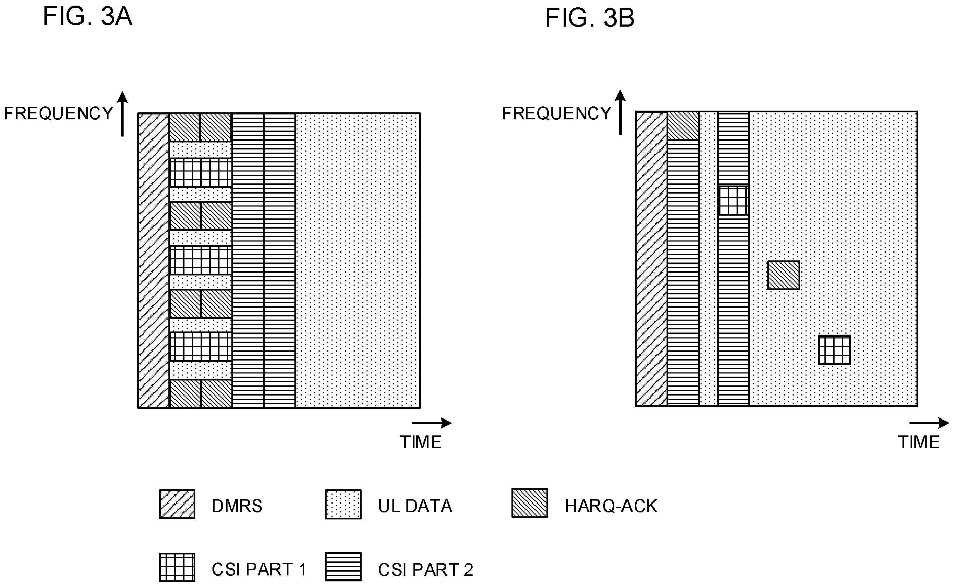

The invention is defined by the appended claims. The following embodiments of puncturing CSI part 2 when it overlaps with HARQ-ACK as depicted in fig. 3B are used to explain the claimed invention but do not form part of it. Other embodiments discussed below are not embodiments of the claimed invention. A user terminal according to one aspect of the present disclosure includes a transmitting section that transmits, on an uplink shared channel, retransmission control information (HARQ-ACK) and channel state information including a plurality of channel state information parts (CSI parts), and a control section that performs control to allocate at least the HARQ-ACK and a specific CSI part to different resources.

### Advantageous Effects of Invention

According to one aspect of the present disclosure, a decrease in communication throughput and so on can be suppressed even in a case where uplink control information is multiplexed on an uplink data channel.

### Brief Description of Drawings

FIG. 1 is a diagram to show an example of allocation control for an HARQ-ACK and a plurality of CSI parts;
FIG. 2 is a diagram to show another example of the allocation control for an HARQ-ACK and a plurality of CSI parts;
FIGS. 3A and 3B are diagrams to show other examples of the allocation control for an HARQ-ACK and a plurality of CSI parts;
FIGS. 4A and 4B are diagrams to show other examples of the allocation control for an HARQ-ACK and a plurality of CSI parts;
FIG. 5 is a diagram to show an example of a schematic structure of a radio communication system according to one embodiment;
FIG. 6 is a diagram to show an example of an overall structure of a radio base station according to one embodiment;
FIG. 7 is a diagram to show an example of a functional structure of the radio base station according to one embodiment;
FIG. 8 is a diagram to show an example of an overall structure of a user terminal according to one embodiment;
FIG. 9 is a diagram to show an example of a functional structure of the user terminal according to one embodiment; and
FIG. 10 is a diagram to show an example of a hardware structure of the radio base station and the user terminal according to one embodiment.

### Description of Embodiments

As a method for achieving a low PAPR (Peak-to-Average Power Patio) and/or low inter-module distortion (IMD) in UL transmission, a method is available in which, in a case where a UCI transmission and a UL data (UL-SCH) transmission occur at the same timing, UCI and UL data are multiplexed on a PUSCH for transmission (piggyback).

In existing LTE systems, in a case where a PUSCH is utilized to transmit UL data and UCI (for example, A/N), puncture processing is executed on the UL data, and the UCI is multiplexed on the resource subjected to the puncture processing. This is because the existing LTE systems do not involve a large capacity (or ratio) of UCI multiplexed on the PUSCH and/or complication of reception processing is suppressed even in a case where an error in detection of a DL signal occurs in the UE.

Executing the puncture processing on data refers to performing coding on the assumption that resources allocated for data are available (or without taking into account the amount of unavailable resources) but avoiding mapping coding symbols to actually unavailable resources (for example, resources for UCI) (clearing the resources). A receiving side avoids using, for decoding, the coding symbols for the punctured resources, allowing suppression of property degradation caused by the puncturing.

For NR, studies have been conducted about employment of rate-matching processing on UL data in a case where a PUSCH is utilized to transmit UL data and UCI.

Executing the rate-matching processing on data refers to controlling the number of bits resulting from coding (coded bits) in consideration of actually available radio resources. In a case where the number of coded bits is smaller than the number of bits that can be mapped to actually available radio resources, at least some of the coded bits may be repeated. In a case where the number of coded bits is larger than the number of bits that can be mapped, some of the coded bits may be deleted.

Execution of the rate-matching processing on the UL data allows the actually available resources to be taken into account, allowing coding to be achieved at a higher coding rate (with higher performance) than that of execution of the puncture processing. Accordingly, for example, in a case where the UCI has a large payload size, employment of the rate-matching processing instead of the puncture processing enables UL signals to be generated with higher performance, allowing communication quality to be improved.

As is the case with the existing LTE systems, UCI on PUSCH may be performed in NR. In this case, UCI multiplexed on the PUSCH for transmission (piggyback) is assumed to include at least a retransmission control signal (HARQ-ACK) and channel state information (CSI).

Incidentally, for NR, studies have been conducted about definition (or support) of a plurality of types of CSI including, for example, at least CSI part 1 and CSI part 2, as channel state information. "CSI part 1" may be referred to as "first CSI," "CSI type 1," "CSI configuration 1," and so on. "CSI part 2" may be referred to as "second CSI," "CSI type 2," "CSI configuration 2," and so on.

CSI part 1 according to the invention includes J information having a higher priority than that of CSI part 2. For example, CSI part 2 may include information premised on information included in CSI part 1 (or information needed based on the information included in CSI part 1). By way of example, CSI part 1 includes information (for example, a rank indicator (RI)) indicating a rank number (or layer number), and CSI part 2 may include information indicating channel quality (for example, channel quality information (CQI)). In this case, CSI part 2 may include CQI premised on ranks included in CSI part 1.

Note that the information indicating the rank number may be RI in the existing LTE systems and that the information indicating the channel quality may be CQI in the existing LTE systems. Of course, no such limitation is imposed on the information included in CSI part 1 or CSI part 2. CSI part 1 may include information related to the rank and PMI, and CSI part 2 may include information related to the CQI. Alternatively, CSI part 1 may include information related to the rank, and CSI part 2 may include information related to the PMI and the CQI.

The information amount of CSI part 1 (or the size or the number of bits) may be specified to be smaller than the information amount of CSI part 2. Alternatively, different PUCCH formats may be employed for CSI part 1 and CSI part 2. Note that the plurality of types of CSI may include two types of CSI parts, CSI part 1 and CSI part 2, or three or more types of CSI parts.

In such a case where a plurality of types of CSI parts are supported, the problem is how to control transmission of each CSI part (for example, allocation of the CSI part to resources). For example, in a case where HARQ-ACK and CSI are multiplexed on a PUSCH for transmission, the problem is how to control allocation (or mapping) of the HARQ-ACK and each CSI part.

Incidentally, for NR, studies have been conducted about control of a method for allocation to a PUSCH (for example, whether to employ the rate-matching or the puncturing), based on the number of bits in a piggybacked HARQ-ACK in a case where the UE performs a PUSCH transmission in accordance with a UL grant.

For example, in a case of piggybacking an HARQ-ACK with up to a certain number of bits (for example, 2 bits) on a PUSCH, the UE may puncture UL data in the PUSCH by using the HARQ-ACK. In a case of piggybacking an HARQ-ACK with more than the certain number of bits (for example, 2 bits) on the PUSCH, the UE may perform the rate-matching on the UL data in the PUSCH by using the HARQ-ACK.

Alternatively, mapping of the HARQ-ACK to be piggybacked on the PUSCH and mapping of the CSI also to be piggybacked on the PUSCH may be separately controlled. For example, in the PUSCH, in a case where the mapping of the HARQ-ACK is performed after the mapping of the CSI, the CSI may be punctured by the HARQ-ACK.

In a case where an HARQ-ACK transmission is performed with the UL data and/or CSI in the PUSCH being punctured, a CSI part having a high priority in the CSI (for example, CSI part 1) may be punctured by the HARQ-ACK in some cases. In this case, the CSI part with the high priority fails to be appropriately transmitted to a base station, and thus communication quality such as communication throughput may be degraded.

In view of this, the inventors of the present invention focused on the possibility that CSI multiplexed on a PUSCH by a mapping method may be punctured by an HARQ-ACK, and came up with the idea of performing control, in a case where an HARQ-ACK and a plurality of CSI parts are allocated to a PUSCH, to map at least a specific CSI part and the HARQ-ACK to different resources.

Embodiments of the present disclosure will be described below in detail. Note that the description below takes, as an example of UCI multiplexed on a PUSCH, transmission confirmation information(also referred to as an "HARQ-ACK (Hybrid Automatic Repeat reQuest-Acknowledge," "ACK" or "NACK (Negative ACK)," "A/N," and so on), CSI part 1, and CSI part 2 but that no such limitation is imposed on the UCI that can be multiplexed on the PUSCH. Other examples of UCI may include at least one of a scheduling request (SR), beam index information (BI (Beam Index)), and a buffer status report (BSR).

In the embodiments below, the HARQ-ACK may be interpreted using other UCI. In the present specification, "data," "data channel (for example, a PUSCH)," "data channel resource," and so on may be interpreted interchangeably. In the description below, radio resources or resources may be any of resources in units of RGB, resources in units of RB resource, and resources of units of RE.

### <Mapping Pattern>

The UE multiplexes the HARQ-ACK and the CSI including the plurality of CSI parts, on the PUSCH, based on a certain condition, for transmission. The certain condition may be a command from the base station (for example, a transmission command for the PUSCH (UL grant)) or any other conditions. The CSI may include at least two or more CSI parts. Note that the UE need not necessarily transmit a plurality of CSI parts at a certain timing (for example, in a slot, a subframe, or the like) but may transmit one CSI part.

In a case of multiplexing the HARQ-ACK and the CSI parts on the PUSCH for transmission, the UE performs control to map at least the HARQ-ACK and a specific CSI part (in this case, CSI part 1) to different resources.

The UE may apply the rate-matching processing or the puncture processing to the HARQ-ACK and CSI part 1 to control allocation. The UE may determine the mapping method for the HARQ-ACK and/or CSI part 1, based on the certain condition (for example, the number of bits) or may utilize a preset mapping method. Different mapping methods may be applied to the HARQ-ACK and to CSI part 1 (for example, the puncture processing is applied to the HARQ-ACK, whereas the rate-matching processing is applied to CSI part 1) to control mapping in the PUSCH.

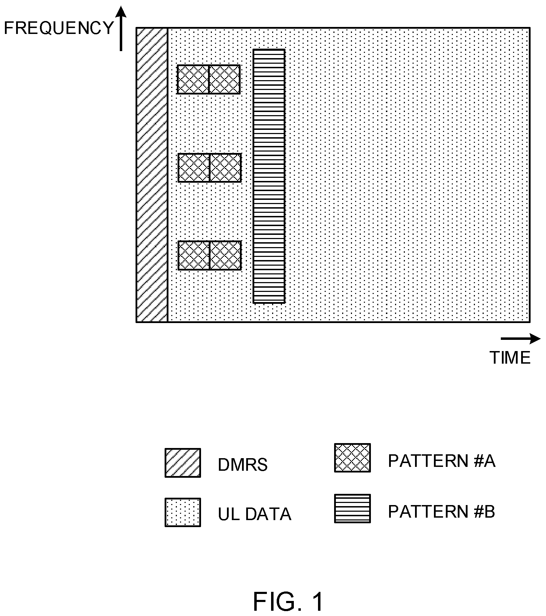

The UE may apply a common mapping pattern (pattern #A) to the HARQ-ACK and CSI part 1, while applying a different mapping pattern (pattern #B) to the other CSI part (in this case, CSI part 2) (see FIG. 1). FIG. 1 shows a case where same pattern #A is applied to the HARQ-ACK and CSI part 1 treated as one group, the HARQ-ACK and CSI part 1 are mapped to different resources in pattern #A.

In other words, a common mapping pattern (pattern #A) is configured for the HARQ-ACK and CSI part 1, and control is performed to map the HARQ-ACK and CSI part 1 to different resources in pattern #A.

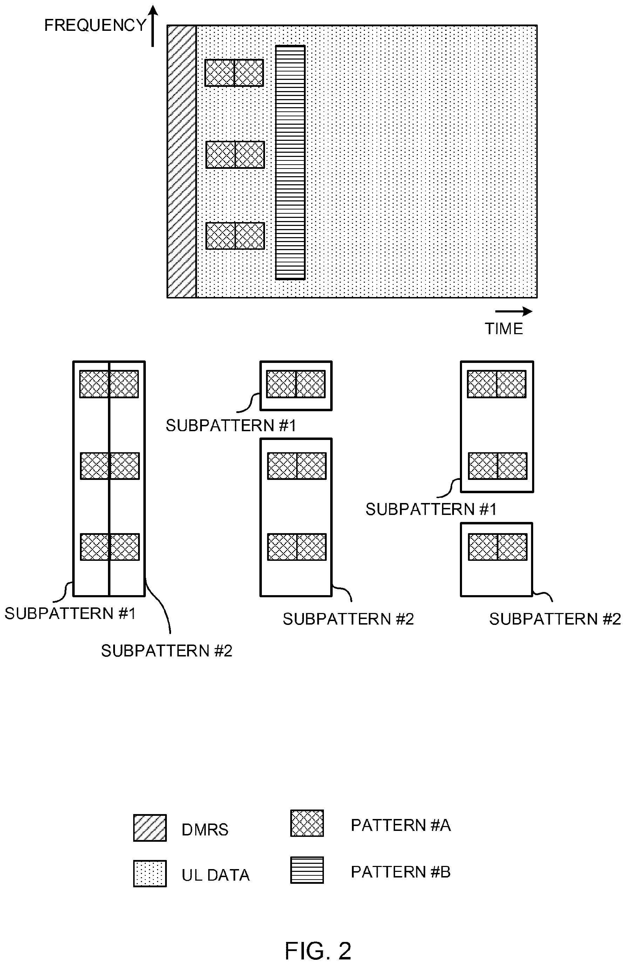

For example, a plurality of subpatterns are configured in pattern #A, and control is performed to map the HARQ-ACK and CSI part 1 to different subpatterns (see FIG. 2). A plurality of subpatterns may be configured to correspond to different radio resources.

FIG. 2 illustrates that subpattern #1 and subpattern #2 are configured in pattern #A and that the HARQ-ACK is allocated to one of the subpatterns (for example, subpattern #1), whereas CSI part 1 is allocated to the other subpattern (for example, subpattern #2) .

Subpattern #1 and subpattern #2 may be configured through multiplexing in a time direction (time multiplexing) or in a frequency direction (frequency multiplexing). Of course, subpattern #1 and subpattern #2 may be configured through multiplexing in both the time direction and frequency direction. The plurality of subpatterns may be configured multiplexing in a spatial direction (spatial multiplexing).

FIG. 2 illustrates a case where resources that are consecutive in the time direction are distributed in the frequency direction and mapped, as pattern #A. In this case, resources in a certain time domain (for example, a symbol) may be designated as subpattern #1, and resources adjacent, in the time direction, to the resources corresponding to subpattern #1 may be designated as subpattern #2. Alternatively, resources configured in a certain frequency domain may be designated as subpattern #1, and resources configured in another frequency domain may be designated as subpattern #2.

The resources corresponding to subpattern #1 and resources corresponding to subpattern #2 may be configured to have the same rate or different ratios. Specifications or the like may be used to provide a preset fixed configuration in which the rate of the resources corresponding to one of the subpatterns (for example, subpattern #2) is higher than the rate of the resources corresponding to the other subpattern (for example, subpattern #1) .

Alternatively, the configuration for the resources corresponding to each subpattern may be changed according to the sizes of the HARQ-ACK and the CSI part. For example, in a case where the size of CSI part 1 is equal to or larger than a certain value (and/or the size of the HARQ-ACK is equal to or smaller than the certain value), the rate, in pattern #A, of the resource corresponding to subpattern #2 is increased. Alternatively, in a case where the size of the HARQ-ACK is equal to or larger than the certain value (and/or the size of CSI part 1 is equal to or smaller than the certain value), the rate of the resources corresponding to subpattern #2 is increased in pattern #A.

By thus configuring subpattern #1 for the HARQ-ACK and subpattern #2 for the CSI, the allocation of the HARQ-ACK can be prevented from interfering with CSI part 1 regardless of the mapping method for the HARQ-ACK (puncture or rate-matching). Consequently, regardless of mapping of the HARQ-ACK, the UE can appropriately transmit at least CSI part 1 to the base station, allowing suppression of degradation of communication quality.

Mapping pattern #A applied to the HARQ-ACK and the specific CSI part (in this case, CSI part 1) and mapping pattern #B applied to the other CSI part may be mapped in different regions. For example, pattern #A may be configured in a region close to a demodulation reference signal (for example, a DMRS for the PUSCH), and pattern B may be configured in another region (see FIG. 1 and FIG. 2). In this case, it is sufficient that at least some of the resources included in pattern #A are mapped closer to the DMRS than the resources included in pattern #B.

Pattern #A mapped closer to the DMRS allows improvement of a channel estimation accuracy achieved at the time of reception of the HARQ-ACK and CSI part 1 having a high priority (importance) at the base station. This increases reception accuracy for the HARQ-ACK and CSI part 1 to allow communication quality to be improved.

The resources corresponding to pattern #A and the resources corresponding to pattern #B may be configured to have the same rate or different rates. Specifications or the like may be used to provide a fixed configuration in which the rate of the resources corresponding to one of the patterns (for example, pattern #B) is higher than the rate of the resources corresponding to the other subpattern (for example, pattern #A).

Alternatively, the configuration for the resources corresponding to each pattern may be changed according to the size of the HARQ-ACK and/or the CSI part and the size of CSI part 2. For example, in a case where the size of CSI part 2 is equal to or larger than a certain value, the rate of the resources corresponding to pattern #B is increased. This allows CSI part 2 to be appropriately transmitted.

Alternatively, in a case where the size of the HARQ-ACK is equal to or larger than the certain value (and/or the size of CSI part 2 is equal to or smaller than the certain value), the rate of the resources corresponding to pattern #A is increased. By increasing a resource amount corresponding to pattern #A, transmission of the HARQ-ACK and CSI part 1 can be appropriately performed.

Pattern #A and pattern #B may be configured in different radio resources (resources not overlapping each other) (see FIG. 3A). In this case, CSI part 2 mapped to the resources corresponding to pattern #B can be inhibited from being punctured by the HARQ-ACK.

Alternatively, pattern #A and pattern #B may be configured in at least partially overlapping radio resources (see FIG. 3B). FIG. 3B illustrates a pattern in which pattern #A is distributed in a time domain and/or a frequency domain and mapped. In this case, in a case where the HARQ-ACK and/or CSI part 1 is mapped to resources overlapping those of pattern #B, CSI part 2 according to the invention is J punctured.

By allowing pattern #A and pattern #B to be configured to overlap, the resources corresponding to each mapping pattern can be flexibly configured. This enables the resources for pattern #B to be mapped close to the DMRS.

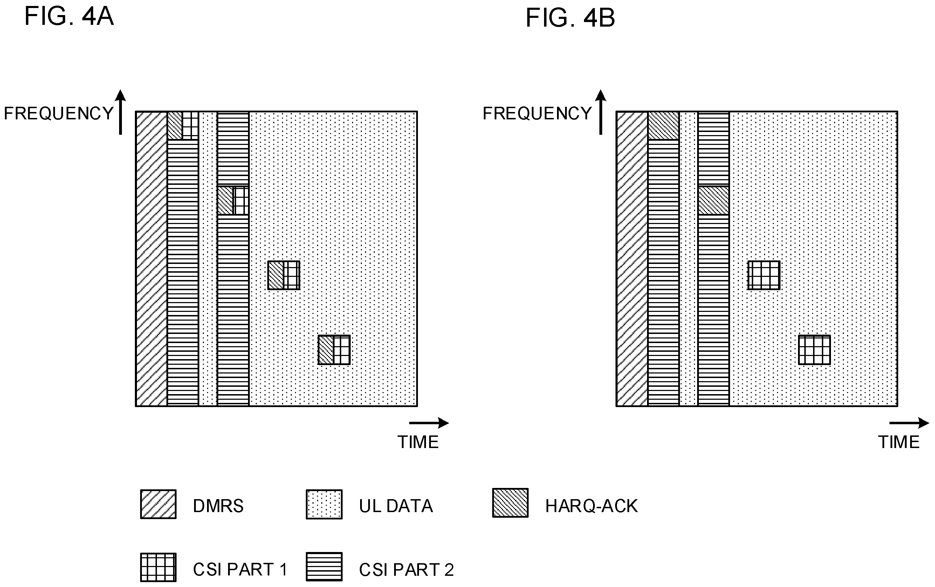

Note that FIG. 3B illustrates a case where the HARQ-ACK (subpattern #1) and CSI part 1 (subpattern #2) are configured in different time domains and in different frequency domains, but no such limitation is intended. For example, the HARQ-ACK and CSI part 1 may be mapped and time-multiplexed in the same frequency domain (see FIG. 4A), or each of the HARQ-ACK and CSI part 1 may be locally mapped (see FIG. 4B).

### <Mapping Pattern and/or Resource Reporting>

Specifications may be used to fixedly define the mapping patterns (pattern #A and pattern #B) and/or subpattern #1 and subpattern #2 in pattern #A. Alternatively, the base station may report, to the UE, information related to the mapping patterns (pattern #A and pattern #B) and/or subpattern #1 and subpattern #2 in pattern #A (hereinafter also referred to as "mapping pattern information"). Note that the "mapping pattern information" may be referred to as "resource information."

The base station may use downlink control information and/or higher layer signaling to report the mapping pattern information to the UE. The downlink control information (DCI) may be a DL assignment reporting scheduling of DL data (for example, a PDSCH) and/or a UL grant reporting scheduling of UL data (for example, a PUSCH).

For example, the base station includes the information related to subpattern #1 and/or subpattern #2 in DCI used to schedule a PDSCH corresponding to the HARQ-ACK (the PDSCH from which the HARQ-ACK results) and reports the DCI to the UE. In a case of transmitting the HARQ-ACK for the PDSCH, the UE may judge resources to which the HARQ-ACK is allocated (subpattern #1), based on the information included in the DCI used to schedule the PDSCH. The information included in the DCI includes information identifying resource positions for subpattern #1 and/or subpattern #2.

The base station may report, to the UE, the information related to subpattern #1 and/or subpattern #2, along with DCI used to command transmission of the PUSCH (for example, a UL grant). In a case of transmitting the PUSCH, the UE may judge resources to which the HARQ-ACK and/or CSI part 1 to be multiplexed on the PUSCH is allocated (subpattern #1 and/or subpattern #2), based on the information included in DCI used to schedule the PUSCH. It is sufficient that the information included in the DCI includes information identifying the resource positions for subpattern #1 and/or subpattern #2.

The base station may report, to the UE, the information related to the subpattern #A and/or the subpattern #B, along with DCI used to command transmission of the PUSCH (for example, the UL grant). Accordingly, in a case where the transmission command for the PUSCH is issued, the UE can appropriately judge the allocation resources to which the HARQ-ACK and the CSI (CSI part 1 and CSI part 2) to be piggybacked on the PUSCH are allocated.

Note that the HARQ-ACK for the PDSCH received after reception of the DCI used to command transmission of the PUSCH (UL grant) may be multiplexed on the PUSCH. In this case, the UE may control the allocation of the HARQ-ACK, based on the information included in the DCI used to schedule the PDSCH. Thus, the UCI on PUSCH can be flexibly controlled, based on the latest information.

Alternatively, the base station may report the information related to the mapping patterns (pattern #A and pattern #B) and/or subpattern #1 and subpattern #2 in pattern #A, to the UE through the higher layer signaling.

Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), and the like.

The base station may pre-configure a plurality of candidate patterns for pattern #A and/or pattern #B through the higher layer signaling, and report, to the UE, a specific candidate pattern by using the downlink control information. Alternatively, the base station may pre-configure a plurality of candidate patterns for subpattern #1 and/or subpattern #2 through the higher layer signaling, and report, to the UE, a specific candidate pattern by using downlink control information. Note that combinatorial candidate patterns for pattern #A, subpattern #1, and subpattern #2 may be reported to the UE through the higher layer signaling and that the base station may report, to the UE, a specific combinatorial candidate pattern by using downlink control information.

The base station may configure whether to employ allocation of the HARQ-ACK and the specific CSI part utilizing the subpatterns, for the UE through higher layer signaling or the like. In this case, in a case where mapping control utilizing the subpatterns is configured through the higher layer signaling, the UE may perform mapping control shown in FIGS. 1, 2, 3A and 3B, and 4A and 4B. Note that, in a case where the mapping control utilizing the subpatterns is not configured, the UE may employ mapping patterns specified in the existing LTE systems.

### (Radio Communication System)

Hereinafter, a structure of a radio communication system according to one embodiment of the present disclosure will be described. In this radio communication system, communication is performed by using a combination of at least one of the above-described plurality of aspects.

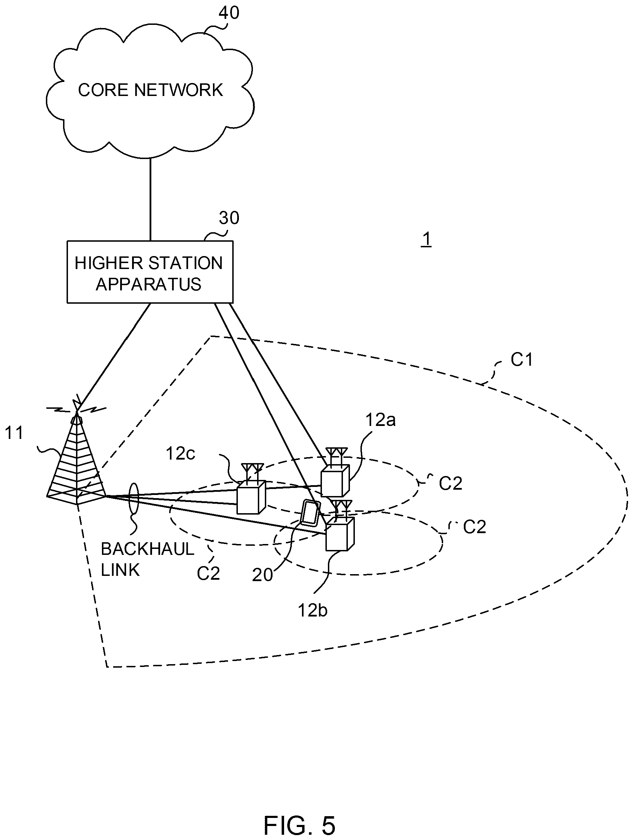

FIG. 5 is a diagram to show an example of a schematic structure of the radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. The user terminals 20 may apply CA or DC by using a plurality of cells (CCs) (for example, five or less CCs or six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

Numerologies may be communication parameters applied to transmission and/or reception of a certain signal and/or channel, and for example, may indicate at least one of a subcarrier spacing, a bandwidth, a symbol length, a cyclic prefix length, a subframe length, a TTI length, the number of symbols per TTI, a radio frame structure, a particular filter processing performed by a transceiver in a frequency domain, a particular windowing processing performed by a transceiver in a time domain, and so on. For example, if certain physical channels use different subcarrier spacings of the OFDM symbols constituted and/or different numbers of the OFDM symbols, it may be referred to as that the numerologies are different.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB), " a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include at least one of a downlink control channel (PDCCH (Physical Downlink Control Channel)), an EPDCCH (Enhanced Physical Downlink Control Channel), a PCFICH (Physical Control Format Indicator Channel), and/or a PHICH (Physical Hybrid-ARQ Indicator Channel). Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. The downlink radio link quality information (CQI (Channel Quality Indicator)), transmission confirmation information, scheduling request (SR), and so on are transmitted on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

The radio communication system 1 transmits a synchronization signal (for example, PSS (Primary Synchronization Signal/SSS (Secondary Synchronization Signal)), a broadcast channel (PBCH (Physical Broadcast Channel), and so on. Note that the synchronization signal and PBCH may be transmitted in synchronization signal blocks (SSBs).

### (Radio Base Station)

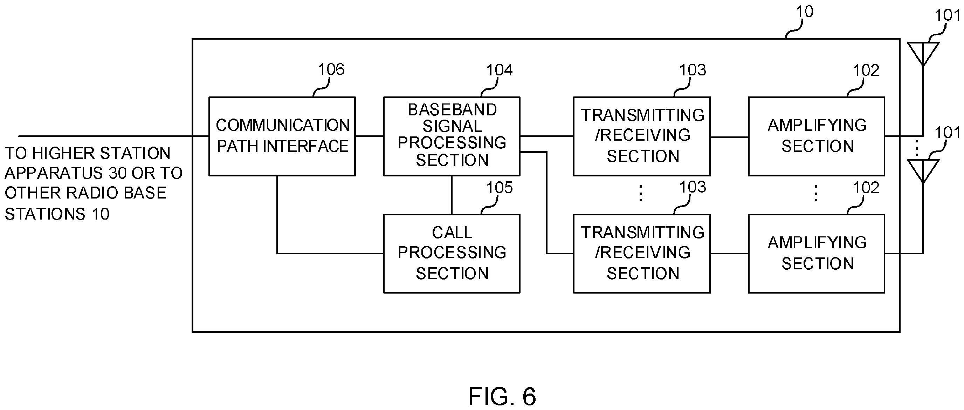

FIG. 6 is a diagram to show an example of an overall structure of the radio base station according to one embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

The transmitting/receiving sections 103 receive retransmission control information (HARQ-ACK) multiplexed on the PUSCH and channel state information including a plurality of channel state information parts (CSI parts). The transmitting/receiving sections 103 may transmit the information related to the UCI mapping pattern multiplexed on the PUSCH (for example, pattern #A and/or pattern #B) and the subpattern (for example, subpattern #1 and/or subpattern #2) in a certain pattern (for example, pattern #A). It is sufficient that the information related to the mapping pattern or the subpattern is information identifying resources.

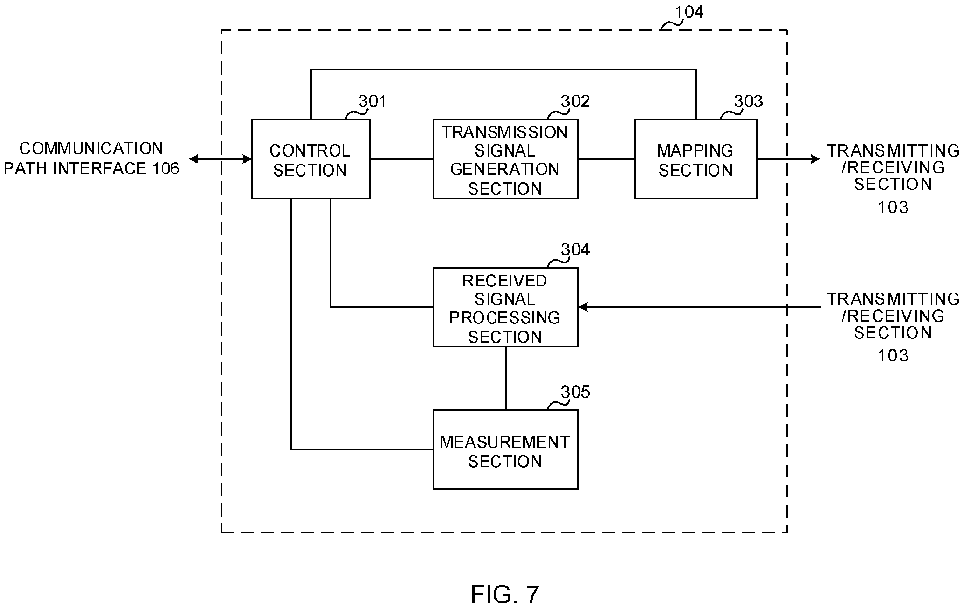

FIG. 7 is a diagram to show an example of a functional structure of the radio base station according to one embodiment. Note that, the present example primarily shows functional blocks that pertain to characteristic parts of an embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can be constituted with a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource assignment) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of the synchronization signal (for example, PSS/SSS), a downlink reference signal (for example, CRS, CSI-RS, DMRS), and so on.

The control section 301 may perform control in which depuncture processing and/or rate-dematching processing is applied to the received uplink shared channel (for example, the PUSCH) or the uplink data.

The transmission signal generation section 302 generates downlink signals (downlink control signals, downlink data signals, downlink reference signals and so on) based on commands from the control section 301 and outputs the downlink signals to the mapping section 303. The transmission signal generation section 302 can be constituted with a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, coding processing and modulation processing are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can be constituted with a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can be constituted with a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can be constituted with a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### <User Terminal>

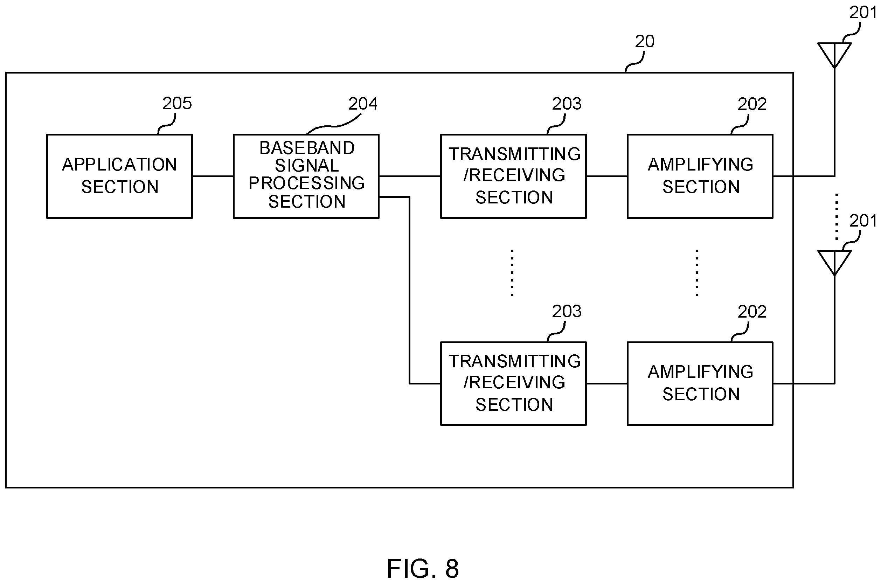

FIG. 8 is a diagram to show an example of an overall structure of a user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can be constituted with transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may be constituted with a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 transmit retransmission control information (HARQ-ACK) multiplexed on the PUSCH and channel state information including a plurality of channel state information parts (CSI parts). The transmitting/receiving sections 203 may receive the information related to the UCI mapping pattern multiplexed on the PUSCH (for example, pattern #A and/or pattern #B) and the subpattern (for example, subpattern #1 and/or subpattern #2) in a certain pattern (for example, pattern #A). It is sufficient that the information related to the mapping pattern or the subpattern is information identifying resources.

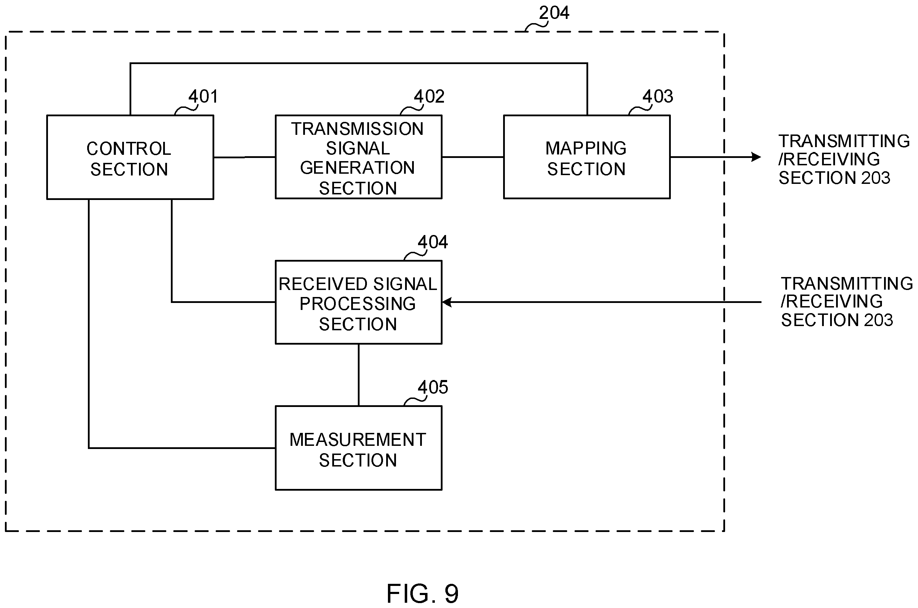

FIG. 9 is a diagram to show an example of a functional structure of a user terminal according to one embodiment. Note that, the present example primarily shows functional blocks that pertain to characteristic parts of an embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be constituted with a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

In a case of transmitting data and uplink control information (UCI, for example, HARQ-ACK) on the uplink shared channel (for example, PUSCH), the control section 401 may determine the transmission processing applied to the above-described data, based on whether the transmission of the above-described data is based on the transmission command (UL grant) from the radio base station.

The control section 401 performs control to allocate/map at least the HARQ-ACK and the specific CSI part to different resources. The control section 401 may apply a first mapping pattern commonly to the HARQ-ACK and the specific CSI part. At least a part of the resources included in the first mapping pattern may be allocated closer to the demodulation reference signal than resources included in a second mapping pattern.

For example, the control section 401 may apply the second mapping pattern, which is different from the first mapping pattern, to the other CSI parts, which are different from the specific CSI part. The first mapping pattern may include a first subpattern for allocation of the HARQ-ACK and a second subpattern for allocation of the specific CSI part.

In a case where the control section 401 acquires a variety of information reported by the radio base station 10 from the received signal processing section 404, the control section 401 may update parameters (allocation resources and the like) to use for control, based on the information.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can be constituted with a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can be constituted with a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can be constituted with a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

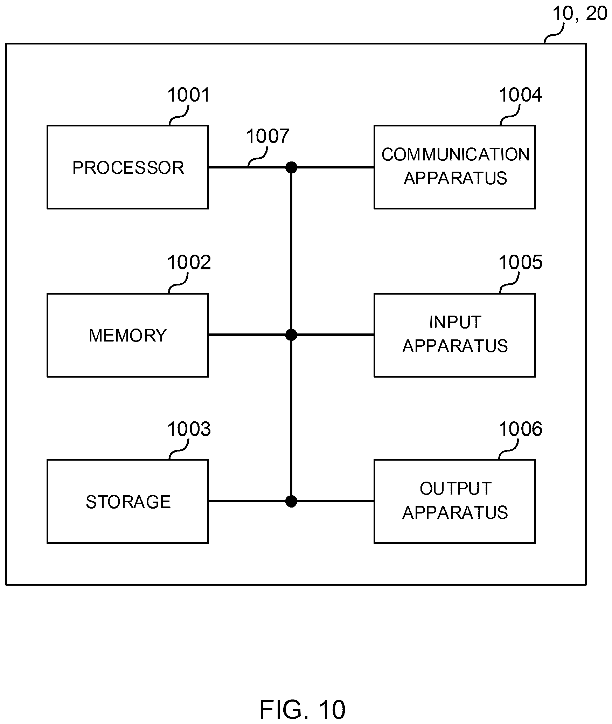

For example, a radio base station, a user terminal, and so on according to one embodiment of the present disclosure may function as a computer that executes the processes of the radio communication method of the present disclosure. FIG. 10 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and/or the like for implementing a radio communication method according to one embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a "TTI," one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the invention according to the present disclosure has been described in detail above, it should be obvious to a person skilled in the art that the invention according to the present disclosure is by no means limited to the embodiments described in this specification. The invention according to the present disclosure can be implemented with various corrections and in various modifications, without departing from the scope of the invention defined by the recitations of claims. Consequently, the description in this specification is provided only for the purpose of explaining examples, and should by no means be construed to limit the invention according to the present disclosure in any way.

The present application is based on JP 2017-243205 A filed on December 1, 2017.

## Claims

1. A terminal comprising:
a control section that, when transmitting HARQ-ACK, a first channel state information, CSI, part, and a second CSI part using an uplink shared channel, wherein the first CSI part includes a rank indicator, RI, and the second CSI part includes channel quality information, CQI, when a resource for the HARQ-ACK overlaps a resource for the second CSI part, controls to puncture the second CSI part; and
a transmitting section that transmits the HARQ-ACK, the first CSI part, and the second CSI part using the uplink shared channel.

2. The terminal according to claim 1, wherein the control section controls to multiplex the first CSI part in a resource other than the resource for the HARQ-ACK.

3. The terminal according to claim 1 or 2, wherein the HARQ-ACK is no more than 2 bits.

4. The terminal according to any one of claims 1 to 3, wherein the control section determines, based on higher layer signaling, at least one of an allocation resource of the HARQ-ACK, an allocation resource of the first CSI part, and an allocation resource of the second CSI part to multiplex on the uplink shared channel.

5. The terminal according to any one of claims 1 to 3, wherein the control section determines, based on downlink control information indicating transmission of the uplink shared channel, at least one of an allocation resource of the HARQ-ACK, an allocation resource of the first CSI part, and an allocation resource of the second CSI part to multiplex on the uplink shared channel.

6. A radio communication method for a terminal comprising:
when transmitting HARQ-ACK, a first channel state information, CSI, part, and a second CSI part using an uplink shared channel wherein the first CSI part includes a rank indicator, RI, and the second CSI part includes channel quality information, CQI, when a resource for the HARQ-ACK overlaps a resource for the second CSI part, puncturing the second CSI part; and
transmitting the HARQ-ACK, the first CSI part, and the second CSI part using the uplink shared channel.

7. A base station comprising:
a control section that, when HARQ-ACK, a first channel state information, CSI, part, and a second CSI part are transmitted using an uplink shared channel, wherein the first CSI part includes a rank indicator, RI, and the second CSI part includes channel quality information, CQI, when a resource for the HARQ-ACK overlaps a resource for the second CSI part, judges that the second CSI part is punctured; and
a receiving section that receives the HARQ-ACK, the first CSI part, and the second CSI part transmitted using the uplink shared channel.

8. A system comprising the terminal of claim 1 and the base station of claim 7.

## Patentansprüche

1. Endgerät, umfassend:
einen Steuerabschnitt, der bei Übertragen von HARQ-ACK, eines ersten Kanalzustandsinformationsteils (CSI-Teil) und eines zweiten CSI-Teils unter Verwendung eines gemeinsam genutzten Uplink-Kanals, wobei der erste CSI-Teil einen Rangindikator (RI) einschließt, und der zweite CSI-Teil Kanalqualitätsinformationen (CQI) einschließt, wenn eine Ressource für das HARQ-ACK eine Ressource für den zweiten CSI-Teil überlappt, zum Punktieren des zweiten CSI-Teils steuert; und
einen Übertragungsabschnitt, der das HARQ-ACK, den ersten CSI-Teil, und den zweiten CSI-Teil unter Verwendung des gemeinsam genutzten Uplink-Kanals überträgt.

2. Endgerät nach Anspruch 1, wobei der Steuerabschnitt zum Multiplexen des ersten CSI-Teils in einer anderen Ressource als der Ressource für das HARQ-ACK steuert.

3. Endgerät nach Anspruch 1 oder 2, wobei das HARQ-ACK nicht mehr als 2 Bits beträgt.

4. Endgerät nach einem der Ansprüche 1 bis 3, wobei der Steuerabschnitt auf der Grundlage einer Signalisierung einer höheren Schicht mindestens eine von einer Allokationsressource des HARQ-ACK, einer Allokationsressource des ersten CSI-Teils, und einer Allokationsressource des zweiten CSI-Teils zum Multiplexen auf dem gemeinsam genutzten Uplink-Kanal bestimmt.

5. Endgerät nach einem der Ansprüche 1 bis 3, wobei der Steuerabschnitt auf der Grundlage von Downlink-Steuerinformationen, die eine Übertragung des gemeinsam genutzten Uplink-Kanals angeben, mindestens eine von einer Allokationsressource des HARQ-ACK, einer Allokationsressource des ersten CSI-Teils und einer Allokationsressource des zweiten CSI-Teils zum Multiplexen auf dem gemeinsam genutzten Uplink-Kanal bestimmt.

6. Funkkommunikationsverfahren für ein Endgerät, umfassend:
beim Übertragen von HARQ-ACK, eines ersten Kanalzustandsinformationsteils (CSI) und eines zweiten CSI-Teils unter Verwendung eines gemeinsam genutzten Uplink-Kanals, wobei der erste CSI-Teil einen Rangindikator (RI) einschließt und der zweite CSI-Teil Kanalqualitätsinformationen (CQI) einschließt,
wenn eine Ressource für das HARQ-ACK eine Ressource für den zweiten CSI-Teil überlappt, Punktieren des zweiten CSI-Teils; und
Übertragen des HARQ-ACK, des ersten CSI-Teils und des zweiten CSI-Teils unter Verwendung des gemeinsam genutzten Uplink-Kanals.

7. Basisstation, umfassend:
einen Steuerabschnitt, der bei Übertragen von HARQ-ACK, eines ersten Kanalzustandsinformationsteils (CSI-Teils) und eines zweiten CSI-Teils unter Verwendung eines gemeinsam genutzten Uplink-Kanals, wobei der erste CSI-Teil einen Rangindikator (RI) einschließt, und der zweite CSI-Teil Kanalqualitätsinformationen (CQI) einschließt, wenn eine Ressource für das HARQ-ACK eine Ressource für den zweiten CSI-Teil überlappt, beurteilt, dass der zweite CSI-Teil punktiert ist; und einen Empfangsabschnitt, der das HARQ-ACK, den ersten CSI-Teil und den zweiten CSI-Teil empfängt, die unter Verwendung des gemeinsam genutzten Uplink-Kanals übertragen werden.

8. System, umfassend das Endgerät nach Anspruch 1 und die Basisstation nach Anspruch 7.

## Revendications

1. Terminal, comprenant :
une section de commande qui, lors de la transmission d'un HARQ-ACK, d'une première partie d'information d'état de canal, CSI, et d'une seconde partie CSI en utilisant un canal partagé en liaison montante, dans lequel la première partie CSI comprend un indicateur de rang, RI, et la seconde partie CSI contient des informations relatives à la qualité du canal, CQI, lorsqu'une ressource prévue pour le HARQ-ACK chevauche une ressource prévue pour la seconde partie CSI, commande la perforation de la seconde partie CSI ; et
une section de transmission qui transmet le HARQ-ACK, la première partie CSI et la seconde partie CSI en utilisant le canal partagé en liaison montante.

2. Terminal selon la revendication 1, dans lequel la section de commande commande le multiplexage de la première partie CSI dans une ressource autre que la ressource pour prévue pour le HARQ-ACK.

3. Terminal selon la revendication 1 ou la revendication 2, dans lequel le HARQ-ACK n'est pas supérieur à 2 bits.

4. Terminal selon l'une quelconque des revendications 1 à 3, dans lequel la section de commande détermine, sur la base d'une signalisation de couche supérieure, au moins une parmi une ressource d'allocation de la HARQ-ACK, une ressource d'allocation de la première partie CSI et une ressource d'allocation de la seconde partie CSI pour le multiplexage sur le canal partagé en liaison montante.

5. Terminal selon l'une quelconque des revendications 1 à 3, dans lequel la section de commande détermine, sur la base d'informations de commande en liaison descendante qui indiquent la transmission du canal partagé en liaison montante, au moins une parmi une ressource d'allocation du HARQ-ACK, une ressource d'allocation de la première partie CSI et une ressource d'allocation de la seconde partie CSI pour le multiplexage sur le canal partagé en liaison montante.

6. Procédé de radiocommunication pour un terminal, comprenant les étapes suivantes :
transmettre un HARQ-ACK, une première partie d'information d'état de canal, CSI, et une seconde partie CSI en utilisant un canal partagé en liaison montante dans lequel la première partie CSI comprend un indicateur de rang, RI, et la seconde partie CSI contient des informations relatives à la qualité du canal, CQI,
lorsqu'une ressource prévue pour le HARQ-ACK chevauche une ressource prévue pour la seconde partie CSI, perforer la seconde partie CSI ; et
transmettre le HARQ-ACK, la première partie CSI et la seconde partie CSI en utilisant le canal partagé en liaison montante.

7. Station de base, comprenant :
une section de commande qui, lorsqu'un HARQ-ACK, une première partie d'information d'état de canal, CSI, et une seconde partie CSI sont transmises en utilisant un canal partagé en liaison montante, dans lequel la première partie CSI comprend un indicateur de rang, RI, et la seconde partie CSI contient des informations relatives à la qualité du canal, CQI, lorsqu'une ressource prévue pour la HARQ-ACK chevauche une ressource prévue pour la seconde partie CSI, juge que la seconde partie CSI est perforée ; et une section de réception qui reçoit le HARQ-ACK, la première partie CSI et la seconde partie CSI transmise en utilisant le canal partagé en liaison montante.

8. Système comprenant le terminal selon la revendication 1 et la station de base selon la revendication 7.
